# EUROPEAN PATENT APPLICATION

(11) **EP 4 465 675 A1**
(43) Date of publication of application: **20.11.2024**
(21) Application number: 22919424.6
(22) Date of filing: 13.01.2022
(51) Int. Cl.: H04W 24/00

(54) **CSI REPORT SENDING METHOD AND APPARATUS, CSI REPORT RECEIVING METHOD AND APPARATUS, DEVICE, AND MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/071844
(87) International publication number: WO 2023/133761

(57) **Abstract**

Embodiments of the present application belong to the field of mobile communication and provide a CSI report sending method and apparatus, a CSI report receiving method and apparatus, a device, and a medium. A method comprises: sending a CSI report, the CSI report comprising: CSI corresponding to at least one instance of sending among least two instances of sending at least one CSI-RS within one period. At least one CSI-RS is sent at least twice within one period, and a UE selects a measurement result for at least one CSI-RS within one period and carries out reporting, enabling the UE to report measurement results of CSI-RSs at different time domain positions in a single CSI report; also, signaling overhead of a CSI reporting procedure is reduced.

## Description

### TECHNICAL FIELD

The present disclosure relates to the field of mobile communication, more particularly, to a method for transmitting a CSI report, a method for receiving a CSI report, an apparatus, a device and a storage medium.

### BACKGROUND

Channel state information (CSI) is obtained by measuring, by a user equipment (UE), a channel state information reference signal (CSI-RS) sent by a base station. The CSI is configured to represent a channel quality of a downlink channel.

In a high mobility scenario of the UE, since the UE moves at a high speed, if a feedback period of the CSI is long, a real-time performance of the CSI is poor, and a large delay results in a reduced accuracy of the CSI, and if the feedback period of the CSI is short, the short feedback period results in a large signaling overhead.

### SUMMARY

Embodiments of the present disclosure provide a method for transmitting a CSI report, a method for receiving a CSI report, an apparatus, a device and a storage medium, capable of, in a high mobility scenario of a UE, ensuring a feedback accuracy of CSI, and reducing a signaling overhead of the CSI in a configuration process and a reporting process. The technical solution is described as follows.

According to an aspect of embodiments of the present disclosure, a method for transmitting a channel state information (CSI) report is provided. The method includes:
transmitting, by a terminal, a CSI report, in which the CSI report includes CSI corresponding to at least one transmission of at least two transmissions of at least one channel state information reference signal (CSI-RS) in one period.

According to an aspect of embodiments of the present disclosure, a method for receiving a channel state information (CSI) report is provided. The method includes:
receiving, by a network device, a CSI report, in which the CSI report includes CSI corresponding to at least one transmission of at least two transmissions of at least one channel state information reference signal (CSI-RS) in one period.

According to another aspect of embodiments of the present disclosure, an apparatus for transmitting a channel state information (CSI) report is provided. The apparatus includes:
a transmitting module, configured to transmit a CSI report, wherein the CSI report comprises CSI corresponding to at least one transmission of at least two transmissions of at least one channel state information reference signal (CSI-RS) in one period.

According to another aspect of embodiments of the present disclosure, an apparatus for receiving a channel state information (CSI) report is provided. The apparatus includes:
a receiving module, configured to receive a CSI report, in which the CSI report includes CSI corresponding to at least one transmission of at least two transmissions of at least one channel state information reference signal (CSI-RS) in one period.

According to another aspect of embodiments of the present disclosure, a communication device is provided. The communication device includes:
a processor and a memory, in which, the memory stores a computer program, and the computer program is loaded and executed by the processor to implement the method for transmitting and/or receiving the CSI report as described above.

According to another aspect of embodiments of the present disclosure, a chip is provided. The chip includes a programmable logic circuit and/or program instructions, and when the chip is in operation, the method for transmitting and/or receiving the CSI report as described above is implemented.

According to another aspect of embodiments of the present disclosure, a computer-readable storage medium is provided. The computer-readable storage medium has a computer program stored thereon, in which the computer program is executed by a processor, to implement the method for transmitting and/or receiving the CSI report as described above.

The technical solution provided in an embodiment of the present disclosure at least includes the following beneficial effects.

By transmitting the at least one CSI-RS at least twice in one period, the UE selects a measurement result of the at least one CSI-RS in one period to report, such that the UE may report the measurement results of the CSI-RSs at different time domain positions in one CSI report, while saving a signaling overhead of the CSI in a reporting process.

It should be noted that, details above and in following are exemplary and illustrative, and do not constitute limitations on the present disclosure.

### BRIEF DESCRIPTION OF THE DRAWINGS

In order to explain the technical solutions in embodiments of the present disclosure more clearly, the drawings described in the embodiments will be briefly introduced below. Obviously, the drawings described as below are only some embodiments of the present disclosure. Those skilled in the art may obtain other drawings from these drawings without creative work.
FIG. 1 is a diagram illustrating a framework of a mobile communication system according to an exemplary embodiment.
FIG. 2 is a flowchart illustrating a method for transmitting a CSI report according to an exemplary embodiment.
FIG. 3 is a diagram illustrating time-frequency resources of repetitions of a CSI-RS in one period according to an exemplary embodiment.
FIG. 4 is a flowchart illustrating a method for transmitting a CSI report according to an exemplary embodiment.
FIG. 5 is a diagram illustrating time-frequency resources of repetitions of a CSI-RS in one period according to another exemplary embodiment.
FIG. 6 is a diagram illustrating time-frequency resources of repetitions of a CSI-RS in one period according to another exemplary embodiment.
FIG. 7 is a flowchart illustrating a method for receiving a CSI report according to an exemplary embodiment.
FIG. 8 is a flowchart illustrating a method for receiving a CSI report according to an exemplary embodiment.
FIG. 9 is a block diagram illustrating a structure of an apparatus for transmitting a CSI report according to an exemplary embodiment.
FIG. 10 is a block diagram illustrating a structure of an apparatus for receiving a CSI report according to an exemplary embodiment.
FIG. 11 is a diagram illustrating a structure of a communication device according to an exemplary embodiment.

### DETAILED DESCRIPTION

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all possible implementations consistent with the present disclosure. Instead, they are merely examples of apparatuses and methods consistent with some aspects of the disclosure as described in the appended claims.

First, a brief introduction to several concepts involved in embodiments of the present disclosure is provided.

Broadband refers to an entire bandwidth, or an entire bandwidth corresponding to a cell, or an entire bandwidth available to a terminal, or an entire bandwidth used by the terminal, or an entire bandwidth configured by the terminal. For example, a bandwidth corresponding to an activated BWP (bandwidth part).

Narrowband refers to a plurality of sub-bands that divides the entire bandwidth into. For example, when the bandwidth is 24-72 physical resource blocks (PRBs), a size of the sub-band is 4 or 8 PRBs, or when the bandwidth is 73-144 PRBs, the size of the sub-band is 8 or 16 PRBs, or when the bandwidth is 145-275 PRBs, the size of the sub-band is 16 or 32 PRBs. Further, the sub-band may be divided into a plurality of frequency domain units or frequency domain basis vectors.

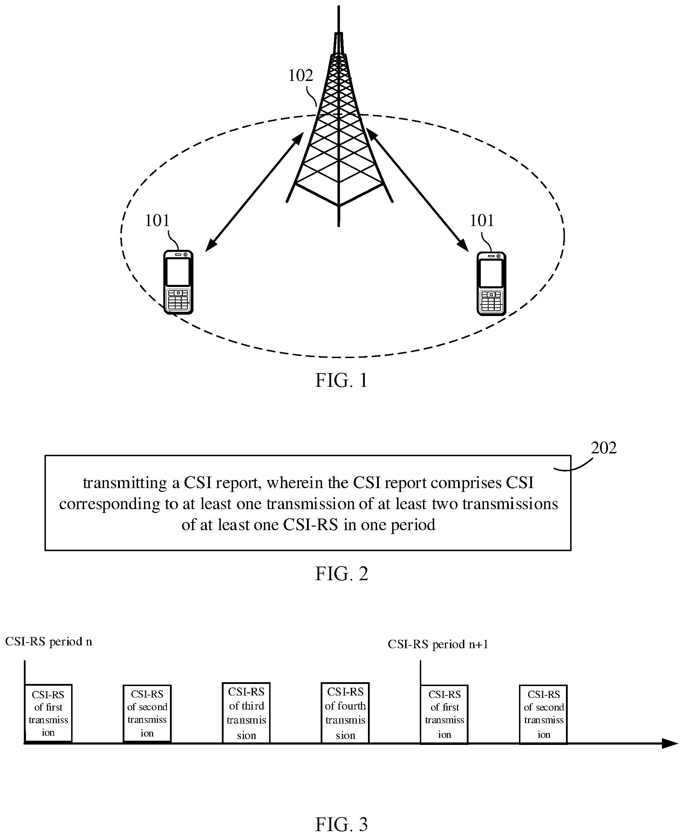

FIG. 1 is a diagram illustrating a framework of a mobile communication system according to an embodiment of the present disclosure. The mobile communication system may include a network device 102. The network device 102 may be a device for communicating with a terminal 101 (or referred to as a communication terminal, or a terminal). The network device 102 may provide communication coverage for a specific geographic area, and may communicate with terminals located within the coverage area.

FIG. 1 illustrates, for example, one network device 102 and two terminals 101. In some embodiments of the present disclosure, the mobile communication system may include a plurality of network devices 102, and the coverage area of each network device 102 may include other number of terminals 101, which is not limited in an embodiment of the present disclosure.

In an embodiment of the present disclosure, the terminal 101 may be a station (ST) in a WLAN (wireless local area network), and may be a cellular phone, a cordless phone, a session initiation protocol (SIP) phone, a wireless local loop (WLL) station, a personal digital assistant (PDA) device, a handheld device with a wireless communication function, a computing device or other processing device connected to a wireless modem, a vehicle-mounted device, a wearable device, a terminal 101 in next-generation mobile communication system, such as a NR network, or a terminal 101 in a future evolved public land mobile network (PLMN) network, etc.

In an embodiment of the present disclosure, the terminal 101 may be a device that provides voice and/or data connectivity to users, and may be used to connect people, objects and machines, such as handheld devices or vehicle-mounted devices with wireless connection functions, etc. The terminal 101 in an embodiment of the present disclosure may be a mobile phone, a Pad, a notebook computer, a palmtop computer, a mobile Internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in a smart city, a wireless terminal in smart home, etc. Optionally, the UE can be used to act as a base station. For example, the terminal 101 may serve as a scheduling entity, which provides sidelink signals between the terminals 101 in V2X or D2D, etc. For example, the cellular phone and an automobile communicate with each other using the sidelink signals. The cellular phone communicates with a smart home device, without relaying communication signals through the base station.

In an embodiment of the present disclosure, the terminal 101 may be deployed on land, including indoor or outdoor, handheld, wearable or vehicle-mounted, or may also be deployed on water (such as a ship, etc.), or may also be deployed in the air (such as an aircraft, a balloon and a satellite).

The terminal 101 in an embodiment of the present disclosure may also be referred to as a terminal, a user equipment (UE), an access terminal, a vehicle-mounted terminal, an industrial control terminal, a UE unit, a UE station, a mobile station, a mobile station, a remote station, a remote terminal, a mobile device, a UE terminal, a wireless communication device, a UE agent or a UE device, etc. The terminal 101 may also be fixed or movable.

As an example but not a limitation, in an embodiment of the present disclosure, the terminal 101 may also be a wearable device. The wearable device, also referred to as a wearable smart device, is a general term for wearable devices that are designed and developed with wearable technology for intelligent integration into everyday attire, such as glasses, gloves, watches, clothing and shoes, etc. The wearable device is a portable device that is worn directly on the body or integrated into clothing or accessories of the user. The wearable device is not only a hardware device, but also achieve powerful functions through software support, data interaction, and cloud interaction. Broadly, the wearable smart devices include devices that are fully functional, large in size, and can achieve complete or partial functions without relying on smart phones, such as smart watches or smart glasses, etc., as well as devices that only focus on a certain type of application function and need to be cooperate with other devices like the smart phones, for example, various smart bracelets for physical sign monitoring and smart jewelry.

The network device 102 in an embodiment of the present disclosure may be a device for communicating with the terminal 101, and the network device 102 may also be referred to as an access network device or a wireless access network device, for example, the network device 102 may be a base station. The network device 102 in an embodiment of the present disclosure may refer to a radio access network (RAN) node (or device) that connects the terminal 101 to a wireless network. The base station may broadly cover various following names, or replace with the following names, such as: a NodeB, an evolved NodeB (eNB), a next generation NodeB (gNB), a relay station, an access point, a transmitting and receiving point (TRP), a transmitting point (TP), a primary station MeNB, a secondary station SeNB, a multi-standard wireless (MSR) node, a home base station, a network controller, an access node , a wireless node, an access point (AP), a transmitting and receiving node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or the like, or a combination thereof. The base station may also refer to a communication module, a modem or a chip configured in the aforementioned equipment or device. The base station may also be a mobile switching center and a device that undertakes a base station function in device-to-device (D2D), vehicle-to-everything (V2X), machine-to-machine (M2M) communication, a network-side device in the 6G network, a device that undertakes the base station function in the future mobile communication system, etc. The case stations may support networks with the same or different access technologies. An embodiment of the present disclosure does not limit a specific technology and a specific device form adopted by the network device 102.

The base station can be fixed or movable. For example, a helicopter or an unmanned aerial vehicle can be configured to act as a mobile base station, and one or more cells can move according to a location of the mobile base station. In another example, the helicopter or the unmanned aerial vehicle may be configured to serve as a device in communication with another base station.

In some deployments, the network device 102 in an embodiment of the present disclosure may refer to the CU or the DU, or, the network device 102 includes the CU and the DU. The gNB may also include the AAU.

The network device 102 and the terminal 101 may be deployed on land, including indoor or outdoor, handheld or vehicle-mounted, or may also be deployed on water; or may also be deployed on an airplane, a balloon and a satellite in the air. In an embodiment of the present disclosure, scenarios where the network device 102 and the terminal 101 are located are not limited.

As an example but not a limitation, in an embodiment of the present disclosure, the network device 102 may have a mobile feature, for example, the network device 102 may be a mobile device. In some embodiments of the present disclosure, the network device 102 may be the satellite or the balloon station. For example, the satellite may be a low earth orbit (LEO) satellite, a medium earth orbit (MEO) satellite, a geostationary earth orbit (GEO) satellite, a high elliptical orbit (HEO) satellite, etc. In some embodiments of the present disclosure, the network device 102 may also be a base station installed on land, in water, and other locations.

In an embodiment of the present disclosure, the network device 102 may provide services for a cell, and the terminal 101 communicates with the network device 102 through transmitting and receiving resources (for example, frequency domain resources, or spectrum resources) used by the cell. The cell may be a cell corresponding to the network device 102 (such as a base station), the cell may belong to the macro base station, or may belong to a base station corresponding to a small cell, and the small cell may include a metro cell, a micro cell, a pico cell, a femto cell, etc. These small cells have characteristics of small coverage and low transmitting power, and are suitable for providing high-rate data transmitting and receiving services.

FIG. 2 is a flowchart illustrating a method for transmitting a CSI report according to an exemplary embodiment of the present disclosure. This embodiment is described by taking the method performed by a terminal as an example. The method includes a following step.

At step 202, a CSI report is transmitted. The CSI report includes CSI corresponding to at least one transmission of at least two transmissions of at least one channel state information reference signal (CSI-RS) in one period.

The at least one CSI-RS is transmitted at least twice in one period. The terminal measures the CSI-RS corresponding to the at least one transmission of the at least two transmissions in one period, and generates a corresponding CSI report.

The at least one CSI-RS includes a non zero power (NZP) CSI-RS and/or a zero power (ZP) CSI-RS. The NZP CSI-RS can be actually generated and mapped to a resource element (RE), and the ZPCSI-RS cannot be generated and mapped to the RE.

"At least two transmissions" may be understood as any one of at least two times of transmitting/receiving, at least two CSI resources, or CSI-RSs transmitted at different time domain positions. The CSI-RSs of the at least two transmissions may be the same CSI-RS, that is, the CSI-RSs of the at least two transmissions have the same index. The CSI-RSs of the at least two transmissions may also be different CSI-RSs, or have different indexes.

Illustratively, as shown in FIG. 3, a longitudinal coordinate represents a frequency domain, and a horizontal ordinate represents a time domain. In the same CSI-RS period, the CSI-RS may be transmitted repeatedly 4 times. FIG. 3 shows a CSI-RS transmitted for first time, a CSI-RS transmitted for second time, a CSI-RS transmitted for third time, and a CSI-RS transmitted for fourth time in a CSI-RS period n, and a CSI-RS transmitted for first time, a CSI-RS transmitted for second time in a CSI-RS period (n+1) (the remaining two transmissions are not shown).

In the CSI-RS period n, the terminal may measure all or part of the CSI-RSs, generate CSIs corresponding to all or part of the CSI-RSs, and send the CSI report to a base station. For example, the CSI report includes CSIs corresponding to the CSI-RSs of all four transmissions in the CSI-RS period n. For another example, the CSI report includes CSIs corresponding to the CSI-RS transmitted for first time and the CSI-RS transmitted for fourth time in the CSI-RS period n.

To sum up, in the method provided by an embodiment, by transmitting the at least one CSI-RS at least twice in one period, the UE selects a measurement result of the at least one CSI-RS in one period to report, such that the UE may report the measurement results of the CSI-RSs at different time domain positions in one CSI report, while saving a signaling overhead of the CSI in a reporting process.

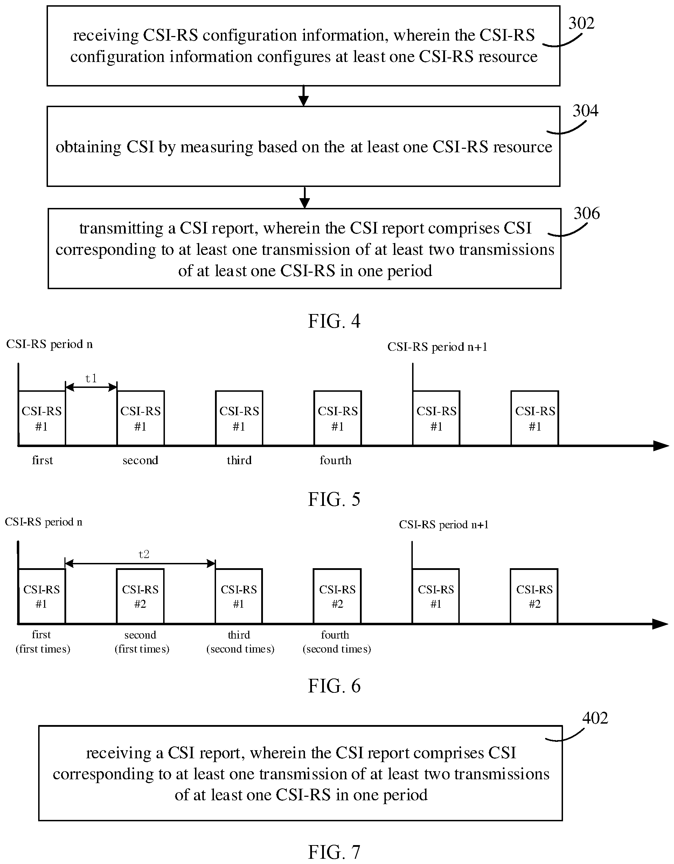

FIG. 4 is a flowchart illustrating a method for transmitting a CSI report according to another exemplary embodiment of the present disclosure. This embodiment is described by taking the method performed by a terminal as an example. The method includes following steps.

At step 302, CSI-RS configuration information is received. The CSI-RS configuration information indicates at least one CSI-RS resource.

The CSI-RS configuration information includes at least one of CSI-RS measurement configuration or CSI reporting configuration corresponding to the CSI-RS.

In some embodiments, the CSI-RS configuration information carries at least one of following information.
- A state of repetition corresponding to the at least one CSI-RS, in which the state includes an on state or an off state.

The repetition refers to a mechanism for retransmitting the same CSI-RS at different time domain positions in the same period, the repetition also be referred to as a number of repetitions. When the state is the on state, the mechanism of the repetition is enabled, and when the state is the off state, the mechanism of the repetition is stopped. In this embodiment, illustration is made by taking the state being the on state as an example.
- A number L of transmissions of the at least one CSI-RS in one period, where L is an integer greater than 0 or 1.

When the state of the repetition is the off state, the number L of transmission of the at least one CSI-RS in one period may be 1. When the state of the repetition is the on state, the number L of transmission of the at least one CSI-RS in one period may be an integer greater than 1, such as 2 or 4.
- An interval T between two transmissions of the at least one CSI-RS in one period.

The time interval T is an integer number of time slots and/or an integer number of symbols.
- A silence pattern of at least one CSI-RS within a period.

The silence pattern is used to indicate that CSI-RS transmissions are omitted at which time positions in which CSI-RS periods.

In some embodiments, the CSI-RS configuration information also carries at least one of following information.
- A period of the at least one CSI-RS.

Periods of different CSI-RSs may be the same or different. In this embodiment, illustration is made by taking the periods of different CSI-RSs being the same as an example.
- A slot offset of the at least one CSI-RS.

In one period, each CSI-RS has its own slot offset. Optionally, the slot offsets of respective CSI-RSs are different. In a case that the state of repetition of a certain CSI-RS is the on state, the slot offset may be represented by s slot offset of the CSI-RS of the first transmission.
- A symbol position occupied by the at least one CSI-RS.
- A frequency domain resource position of the at least one CSI-RS.
- A number of ports of the at least one CSI-RS.
- A density of the at least one CSI-RS.
- Quasi co-location (QCL) information of the at least one CSI-RS, such as QCL Type D information.

The QCL Type D information is configured to indicate a spatial receiving parameter corresponding to the CSI-RS, which is commonly called a beam. The CSI-RSs of the repetitions at different time domain positions in the same period may be transmitted based on the same beam or based on different beams.

Step 304: CSI is obtained by measuring based on the at least one CSI-RS resource.

Based on the at least one CSI-RS resource configured by the CSI-RS configuration information, the terminal measures the at least one CSI-RS resource to obtain the CSI. Optionally, each CSI-RS period in the CSI-RS configuration information includes at least two CSI-RS resources, and there is a CSI-RS to be transmitted on each of the at least two CSI-RS resources.

The CSI-RSs transmitted on the at least two CSI-RS resources are the same CSI-RS, or the CSI-RSs transmitted on the at least two CSI-RS resources are different CSI-RSs.

The at least one CSI-RS includes: a NZP CSI-RS and/or a ZP CSI-RS. The NZP CSI-RS can be actually generated and mapped to a resource element (RE), and the ZPCSI-RS cannot be generated and mapped to the RE.

Illustratively, there is at least one CSI-RS that is retransmitted in one period, that is, the number of transmissions of the at least one CSI-RS in one period is greater than 1.

In an example shown in FIG. 5, in the CSI-RS period n, the number L of transmissions of the CSI-RS with an index "#1" is equal to 4, and a slot offset of a first CSI-RS#1 is 0, an interval between two adjacent transmissions of the same CSI-RS is t1. Four transmissions of the same CSI-RS in one period correspond to the same beam, or correspond to different beams.

For example, all four transmissions are transmitted on beam 1. For another example, four transmissions are transmitted on beam 1, beam 2, beam 3, and beam 4, respectively. For another example, the first transmission and the third transmission are transmitted on beam 1, and the second transmission and the fourth transmission are transmitted on beam 2.

In an example shown in FIG. 6, in the CSI-RS period n, the number L of transmissions of each of CSI-RSs with an index "#1" and an index "#2" is equal to 2, and a slot offset of a first CSI-RS#1 is 0, and a slot offset of a second CSI-RS#1 is greater than 0, an interval between two adjacent transmissions of the same CSI-RS is t2.

Similarly, four transmissions of two CSI-RSs in one period correspond to the same beam, or correspond to different beams.

For example, all four transmissions are transmitted on beam 1. For another example, four transmissions are transmitted on beam 1, beam 2, beam 3, and beam 4, respectively. For another example, the first transmission and the third transmission are transmitted on beam 1, and the second transmission and the fourth transmission are transmitted on beam 2.

At step 306, a CSI report is transmitted. The CSI report includes CSI corresponding to at least one transmission of at least two transmissions of at least one CSI-RS in one period.

"At least two transmissions" may be understood as any one of at least two times of transmitting/receiving, at least two CSI resources, or CSI-RSs transmitted at different time domain positions. The CSI-RSs of the at least two transmissions may be the same CSI-RS, that is, the CSI-RSs of the at least two transmissions have the same index. The CSI-RSs of the at least two transmissions may also be different CSI-RSs, or have different indexes.

In one period, the terminal may measure all or part of the CSI-RSs, generate CSIs corresponding to all or part of the CSI-RSs in one period, and send the CSI report to a base station. For example, the CSI report includes CSIs corresponding to the CSI-RSs of all four transmissions in the CSI-RS period n. For another example, the CSI report includes CSIs corresponding to the CSI-RS transmitted for third time and the CSI-RS transmitted for fourth time in the CSI-RS period n.

A reporting period of the CSI report is greater than or equal to the CSI-RS period.

In some embodiments, the CSI report includes CSIs corresponding to at least two transmissions of the at least one CSI-RS in one period.

For example, in FIG. 5, the CSI report includes the CSIs corresponding to CSI-RS#1 of all four transmissions in the CSI-RS period n; or, the CSI report includes the CSIs corresponding to CSI-RS#1 transmitted for second time and CSI-RS#1 transmitted for fourth time in the CSI-RS period n.

For another example, in FIG. 6, the CSI report includes the CSIs corresponding to CSI-RS#1 of two transmissions and CSI-RS#2 of two transmissions in the CSI-RS period n; or, the CSI report includes the CSI corresponding to CSI-RS#1 transmitted for second time and the CSI corresponding to CSI-RS#2 transmitted for second time in the CSI-RS period n.

In some embodiments, the CSI-RS report indicates:
an index of the at least one CSI-RS, and a sequence number corresponding to at least one transmission of L transmissions in one period for the index of the at least one CSI-RS.

In some embodiments, the CSI-RS report carries at least one of amplitude or phase of the at least one CSI-RS.

In some embodiments, the amplitude includes an amplitude corresponding to the at least one transmission of the L transmissions of the at least one CSI-RS in one period. For example, the amplitude includes at least one of a broadband amplitude or a narrowband amplitude.

In some embodiments, the phase includes an amplitude corresponding to the at least one transmission of the L transmissions of the at least one CSI-RS in one period. For example, the phase includes at least one of a broadband phase or a narrowband phase.

For example, in FIG. 5, the CSI report includes the CSIs corresponding to CSI-RS#1 of all four transmissions in the CSI-RS period n, and Table 1 illustratively shows the content of the CSI report.

**Table 1**

| index | sequence number | CSI | amplitude | phase |
|---|---|---|---|---|
| #1 | 1 | CSI 1 | amplitude 1 | phase 1 |
| #1 | 2 | CSI 2 | amplitude 2 | phase 2 |
| #1 | 3 | CSI 3 | amplitude 3 | phase 3 |
| #1 | 4 | CSI 4 | amplitude 4 | phase 4 |

For example, in FIG. 5, the CSI report includes the CSIs corresponding to CSI-RS#1 transmitted for second time and CSI-RS#1 transmitted for fourth time in the CSI-RS period n, and Table 2 illustratively shows the content of the CSI report.

**Table 2**

| index | sequence number | CSI | amplitude | phase |
|---|---|---|---|---|
| #1 | 2 | CSI 2 | amplitude 2 | phase 2 |
| #1 | 4 | CSI 4 | amplitude 4 | phase 4 |

For example, in FIG. 6, the CSI report includes the CSIs corresponding to CSI-RSs of all four transmissions in the CSI-RS period n, and Table 3 illustratively shows the content of the CSI report.

**Table 3**

| index | sequence number | CSI | amplitude | phase |
|---|---|---|---|---|
| #1 | 1 | CSI 1 | amplitude 1 | phase 1 |
| #2 | 1 | CSI 2 | amplitude 2 | phase 2 |
| #1 | 2 | CSI 3 | amplitude 3 | phase 3 |
| #2 | 2 | CSI 4 | amplitude 4 | phase 4 |

For example, in FIG. 6, the CSI report includes the CSI corresponding to CSI-RS#1 transmitted for second time and the CSI corresponding to CSI-RS#2 transmitted for second time in the CSI-RS period n, and Table 4 illustratively shows the content of the CSI report.

**Table 4**

| index | sequence number | CSI | amplitude | phase |
|---|---|---|---|---|
| #1 | 2 | CSI 3 | amplitude 3 | phase 3 |
| #2 | 2 | CSI 4 | amplitude 4 | phase 4 |

It can be seen from the above tables that the terminal may measure the CSI-RS on the plurality of CSI-RS resources in one period. For example, the terminal may measure the same CSI-RS transmitted on one beam at four different time domain positions, and report the corresponding CSI report, causing the base station to obtain the CSIs at the plurality of different time domain positions in one CSI report. Therefore, the real-time and accurate CSI may also be obtained in a high mobility scenario of the UE. To sum up, in the method provided by an embodiment, by transmitting the at least one CSI-RS at least twice in one period, the UE selects a measurement result of the at least one CSI-RS in one period to report, such that the UE may report the measurement results of the CSI-RSs at different time domain positions in one CSI report, while saving a signaling overhead of the CSI in a reporting process.

On the other hand, since the base station can configure the at least one CSI-RS to be transmitted at least twice in one period in the same CSI-RS configuration information, a signaling overhead in a CSI configuration process may be saved.

FIG. 7 is a flowchart illustrating a method for receiving a CSI report according to an exemplary embodiment of the present disclosure. This embodiment is described by taking the method performed by an access network device (such as a base station) as an example. The method includes a following step.

At step 402, a CSI report is received. The CSI report includes CSI corresponding to at least one transmission of at least two transmissions of at least one channel state information reference signal (CSI-RS) in one period.

The access network device receives the CSI report received by the terminal. The at least one CSI-RS is transmitted at least twice in one period. The terminal measures the CSI-RS corresponding to the at least one transmission of the at least two transmissions in one period, and generates a corresponding CSI report.

The at least one CSI-RS includes a NZP CSI-RS and/or a ZP CSI-RS. The NZP CSI-RS can be actually generated and mapped to a RE, and the ZPCSI-RS cannot be generated and mapped to the RE.

"At least two transmissions" may be understood as any one of at least two times of transmitting/receiving, at least two CSI resources, or CSI-RSs transmitted at different time domain positions. The CSI-RSs of the at least two transmissions may be the same CSI-RS, that is, the CSI-RSs of the at least two transmissions have the same index. The CSI-RSs of the at least two transmissions may also be different CSI-RSs, or have different indexes.

To sum up, in the method provided by an embodiment, by transmitting the at least one CSI-RS at least twice in one period, the UE selects a measurement result of the at least one CSI-RS in one period to report, such that the UE may report the measurement results of the CSI-RSs at different time domain positions in one CSI report, while saving a signaling overhead of the CSI in a reporting process.

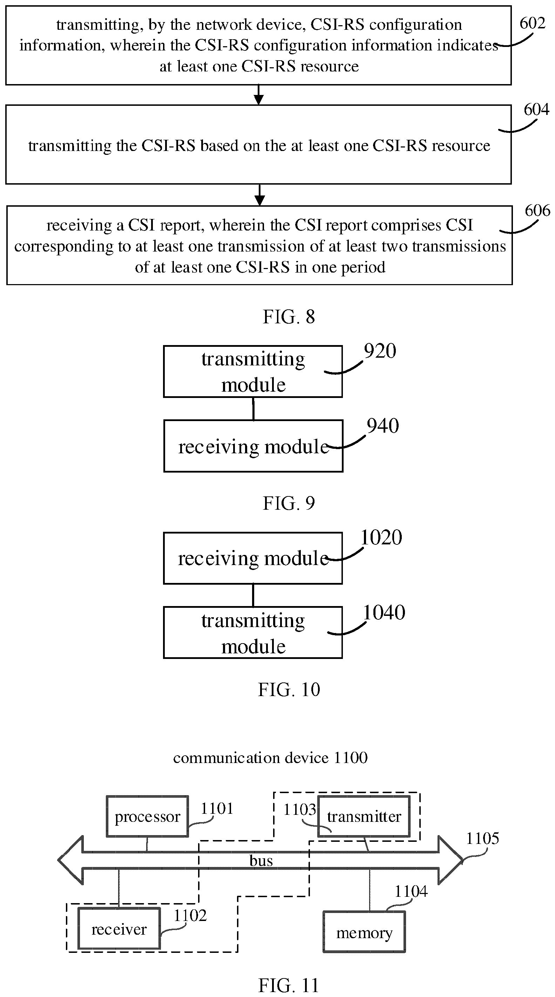

FIG. 8 is a flowchart illustrating a method for transmitting a CSI report according to another exemplary embodiment of the present disclosure. This embodiment is described by taking the method performed by an access network device (such as a base station) as an example. The method includes following steps.

At step 602, CSI-RS configuration information is transmitted. The CSI-RS configuration information indicates at least one CSI-RS resource.

The CSI-RS configuration information includes at least one of CSI-RS measurement configuration or CSI reporting configuration corresponding to the CSI-RS.

In some embodiments, the CSI-RS configuration information carries at least one of following information.
- A state of repetition corresponding to the at least one CSI-RS, in which the state includes an on state or an off state.

The repetition refers to a mechanism for retransmitting the same CSI-RS at different time domain positions in the same period, the repetition also be referred to as a number of repetitions. When the state is the on state, the mechanism of the repetition is enabled, and when the state is the off state, the mechanism of the repetition is stopped. In this embodiment, illustration is made by taking the state being the on state as an example.
- A number L of transmissions of the at least one CSI-RS in one period, where L is an integer greater than 0 or 1.

When the state of the repetition is the off state, the number L of transmission of the at least one CSI-RS in one period may be 1. When the state of the repetition is the on state, the number L of transmission of the at least one CSI-RS in one period may be an integer greater than 1, such as 2 or 4.
- An interval T between two transmissions of the at least one CSI-RS in one period.

The time interval T is an integer number of time slots and/or an integer number of symbols.
- A silence pattern of at least one CSI-RS within a period.

The silence pattern is used to indicate that CSI-RS transmissions are omitted at which time positions in which CSI-RS periods.

In some embodiments, the CSI-RS configuration information also carries at least one of following information.
- A period of the at least one CSI-RS.

Periods of different CSI-RSs may be the same or different. In this embodiment, illustration is made by taking the periods of different CSI-RSs being the same as an example.
- A slot offset of the at least one CSI-RS.

In one period, each CSI-RS has its own slot offset. Optionally, the slot offsets of respective CSI-RSs are different. In a case that the state of repetition of a certain CSI-RS is the on state, the slot offset may be represented by s slot offset of the CSI-RS of the first transmission.
- A symbol position occupied by the at least one CSI-RS.
- A frequency domain resource position of the at least one CSI-RS.
- A number of ports of the at least one CSI-RS.
- A density of the at least one CSI-RS.
- QCL information of the at least one CSI-RS, such as QCL Type D information.

The QCL Type D information is configured to indicate a spatial receiving parameter corresponding to the CSI-RS, which is commonly called a beam. The CSI-RSs of the repetitions at different time domain positions in the same period may be transmitted based on the same beam or based on different beams.

Step 604: the CSI-RS is transmitted based on the at least one CSI-RS resource.

Based on the at least one CSI-RS resource configured by the CSI-RS configuration information, the access network device transmits the CSI-RS on the at least one CSI-RS resource. Optionally, each CSI-RS period in the CSI-RS configuration information includes at least two CSI-RS resources, and there is a CSI-RS to be transmitted on each of the at least two CSI-RS resources.

The CSI-RSs transmitted on the at least two CSI-RS resources are the same CSI-RS, or the CSI-RSs transmitted on the at least two CSI-RS resources are different CSI-RSs.

The at least one CSI-RS includes: a NZP CSI-RS and/or a ZP CSI-RS. The NZP CSI-RS can be actually generated and mapped to a resource element (RE), and the ZPCSI-RS cannot be generated and mapped to the RE.

Illustratively, there is at least one CSI-RS that is retransmitted in one period, that is, the number of transmissions of the at least one CSI-RS in one period is greater than 1.

In an example shown in FIG. 5, in the CSI-RS period n, the number L of transmissions of the CSI-RS with an index "#1" is equal to 4, and a slot offset of a first CSI-RS#1 is 0, an interval between two adjacent transmissions of the same CSI-RS is t1. Four transmissions of the same CSI-RS in one period correspond to the same beam, or correspond to different beams.

For example, all four transmissions are transmitted on beam 1. For another example, four transmissions are transmitted on beam 1, beam 2, beam 3, and beam 4, respectively. For another example, the first transmission and the third transmission are transmitted on beam 1, and the second transmission and the fourth transmission are transmitted on beam 2.

In an example shown in FIG. 6, in the CSI-RS period n, the number L of transmissions of each of CSI-RSs with an index "#1" and an index "#2" is equal to 2, and a slot offset of a first CSI-RS#1 is 0, and a slot offset of a second CSI-RS#1 is greater than 0, an interval between two adjacent transmissions of the same CSI-RS is t2.

Similarly, four transmissions of two CSI-RSs in one period correspond to the same beam, or correspond to different beams.

For example, all four transmissions are transmitted on beam 1. For another example, four transmissions are transmitted on beam 1, beam 2, beam 3, and beam 4, respectively. For another example, the first transmission and the third transmission are transmitted on beam 1, and the second transmission and the fourth transmission are transmitted on beam 2.

At step 606, a CSI report is received. The CSI report includes CSI corresponding to at least one transmission of at least two transmissions of at least one CSI-RS in one period.

"At least two transmissions" may be understood as any one of at least two times of transmitting/receiving, at least two CSI resources, or CSI-RSs transmitted at different time domain positions. The CSI-RSs of the at least two transmissions may be the same CSI-RS, that is, the CSI-RSs of the at least two transmissions have the same index. The CSI-RSs of the at least two transmissions may also be different CSI-RSs, or have different indexes.

In one period, the terminal may measure all or part of the CSI-RSs, generate CSIs corresponding to all or part of the CSI-RSs in one period, and send the CSI report to a base station. For example, the CSI report includes CSIs corresponding to the CSI-RSs of all four transmissions in the CSI-RS period n. For another example, the CSI report includes CSIs corresponding to the CSI-RS transmitted for third time and the CSI-RS transmitted for fourth time in the CSI-RS period n.

A reporting period of the CSI report is greater than or equal to the CSI-RS period.

In some embodiments, the CSI report includes CSIs corresponding to at least two transmissions of the at least one CSI-RS in one period.

For example, in FIG. 5, the CSI report includes the CSIs corresponding to CSI-RS#1 of all four transmissions in the CSI-RS period n; or, the CSI report includes the CSIs corresponding to CSI-RS#1 transmitted for second time and CSI-RS#1 transmitted for fourth time in the CSI-RS period n.

For another example, in FIG. 6, the CSI report includes the CSIs corresponding to CSI-RS#1 of two transmissions and CSI-RS#2 of two transmissions in the CSI-RS period n; or, the CSI report includes the CSI corresponding to CSI-RS#1 transmitted for second time and the CSI corresponding to CSI-RS#2 transmitted for second time in the CSI-RS period n.

In some embodiments, the CSI-RS report indicates:
an index of the at least one CSI-RS, and a sequence number corresponding to at least one transmission of L transmissions in one period for the index of the at least one CSI-RS.

In some embodiments, the CSI-RS report carries at least one of amplitude or phase of the at least one CSI-RS.

In some embodiments, the amplitude includes an amplitude corresponding to the at least one transmission of the L transmissions of the at least one CSI-RS in one period. For example, the amplitude includes at least one of a broadband amplitude or a narrowband amplitude.

In some embodiments, the phase includes an amplitude corresponding to the at least one transmission of the L transmissions of the at least one CSI-RS in one period. For example, the phase includes at least one of a broadband phase or a narrowband phase.

For example, the terminal may measure the CSI-RS on the plurality of CSI-RS resources in one period. For example, the terminal may measure the same CSI-RS transmitted on one beam at four different time domain positions, and report the corresponding CSI report, causing the base station to obtain the CSIs at the plurality of different time domain positions in one CSI report. Therefore, the real-time and accurate CSI may also be obtained in a high mobility scenario of the UE.

To sum up, in the method provided by an embodiment, by transmitting the at least one CSI-RS at least twice in one period, the UE selects a measurement result of the at least one CSI-RS in one period to report, such that the UE may report the measurement results of the CSI-RSs at different time domain positions in one CSI report, while saving a signaling overhead of the CSI in a reporting process.

On the other hand, since the base station can configure the at least one CSI-RS to be transmitted at least twice in one period in the same CSI-RS configuration information, a signaling overhead in a CSI configuration process may be saved.

FIG. 9 is a block diagram illustrating a structure of an apparatus for transmitting a CSI report according to an exemplary embodiment of the present disclosure. The apparatus includes:
a transmitting module 920, configured to transmit a CSI report, in which, the CSI report includes CSI corresponding to at least one transmission of at least two transmissions of at least one channel state information reference signal (CSI-RS) in one period.

In a possible design of an embodiment, the apparatus further includes:
a receiving module 940, configured to receive CSI-RS configuration information, in which the CSI-RS configuration information indicates at least one CSI-RS resource;

The CSI report includes CSI obtained by measuring based on the at least one CSI-RS resource.

In a possible design of an embodiment, the CSI-RS configuration information carries at least one of:
a state of repetition corresponding to the at least one CSI-RS, wherein the state comprises an on state or an off state;
a number L of transmissions of the at least one CSI-RS in one period, where L is an integer greater than 1;
an interval T between two transmissions of the at least one CSI-RS in one period; or
a muting pattern of the at least one CSI-RS in one period.

In a possible design of an embodiment, the CSI-RS configuration information further carries at least one of:
a period of the at least one CSI-RS;
a slot offset of the at least one CSI-RS;
a symbol position occupied by the at least one CSI-RS;
a frequency domain resource position of the at least one CSI-RS;
a number of ports of the at least one CSI-RS;
a density of the at least one CSI-RS; or
quasi co-location (QCL) information of the at least one CSI-RS, such as QCL Type D information, commonly called as beam information.

In a possible design of an embodiment, the CSI-RS report indicates:
an index of the at least one CSI-RS, and a sequence number corresponding to at least one transmission of L transmissions in one period for the index of the at least one CSI-RS.

In a possible design of an embodiment, the CSI-RS report indicates:
at least one of amplitude and phase of the at least one CSI-RS.

In a possible design of an embodiment, the amplitude includes at least one of a broadband amplitude or a narrowband amplitude.

In a possible design of an embodiment, the amplitude includes an amplitude corresponding to the at least one transmission of the L transmissions of the at least one CSI-RS in one period.

In a possible design of an embodiment, the phase includes at least one of a broadband phase or a narrowband phase.

In a possible design of an embodiment, the phase includes a phase corresponding to the at least one transmission of the L transmissions of the at least one CSI-RS in one period.

FIG. 10 is a block diagram illustrating a structure of an apparatus for transmitting a CSI report according to an exemplary embodiment of the present disclosure. The apparatus includes:
a receiving module 1020, configured to receive a CSI report, wherein the CSI report comprises CSI corresponding to at least one transmission of at least two transmissions of at least one channel state information reference signal (CSI-RS) in one period.

In a possible design of an embodiment, the apparatus further includes:
a transmitting module 1040, configured to transmit CSI-RS configuration information, in which the CSI-RS configuration information indicates at least one CSI-RS resource;
in which the CSI report includes CSI obtained by measuring based on the at least one CSI-RS resource.

In a possible design of an embodiment, the CSI-RS configuration information carries at least one of:
a state of repetition corresponding to the at least one CSI-RS, wherein the state comprises an on state or an off state;
a number L of transmissions of the at least one CSI-RS in one period, where L is an integer greater than 1;
an interval T between two transmissions of the at least one CSI-RS in one period;
a muting pattern of the at least one CSI-RS in one period.

In a possible design of an embodiment, the CSI-RS configuration information further carries at least one of:
a period of the at least one CSI-RS;
a slot offset of the at least one CSI-RS;
a symbol position occupied by the at least one CSI-RS;
a frequency domain resource position of the at least one CSI-RS;
a number of ports of the at least one CSI-RS;
a density of the at least one CSI-RS; or
quasi co-location (QCL) information of the at least one CSI-RS, such as QCL Type D information, is commonly called beam information.

In a possible design of an embodiment, the CSI-RS report indicates:
an index of the at least one CSI-RS, and a sequence number corresponding to at least one transmission of L transmissions in one period for the index of the at least one CSI-RS.

In a possible design of an embodiment, the CSI-RS report indicates:
at least one of amplitude or phase of the at least one CSI-RS.

In a possible design of an embodiment, the amplitude includes at least one of a broadband amplitude or a narrowband amplitude.

In a possible design of an embodiment, the amplitude includes an amplitude corresponding to the at least one transmission of the L transmissions of the at least one CSI-RS in one period.

In a possible design of an embodiment, the phase includes at least one of a broadband phase or a narrowband phase.

In a possible design of an embodiment, the phase includes a phase corresponding to the at least one transmission of the L transmissions of the at least one CSI-RS in one period.

FIG. 11 is a diagram illustrating a structure of a communication device (a UE or a network device) according to an exemplary embodiment of the present disclosure. The communication device includes a processor 1101, a receiver 1102, a transmitter 1103, a memory 1104 and a bus 1105.

The processor 1101 includes one or more processing cores. The processor 1101 executes various function applications and information processing by running a software program or a module.

The receiver 1102 and the transmitter 1103 may be implemented as a communication component, which may be a communication chip.

The memory 1104 is communicatively connected to the processor 1701 via the bus 1105.

The memory 1104 may be configured to store at least one instruction, and the processor 1701 is configured to execute the at least one instruction to implement all steps in the above method embodiments.

In addition, the memory 1104 may be implemented by any type of volatile or non-volatile storage devices or their combination. The volatile or non-volatile storage device includes but not limited to a magnetic disk or an optical disk, an electrically-erasable programmable read only memory (EEPROM), an erasable programmable read-only memory (EPROM), a static random access memory (SRAM), a read-only memory (ROM), a magnetic memory, a flash memory and a programmable read-only memory (PROM).

In an example embodiment, the present disclosure is also provided a non-transitory computer-readable storage medium including instructions, such as a memory including instructions, which can be executed by a processor of a communication device to implement the above-mentioned method for determining a coverage enhancement level. For example, the non-transitory computer-readable storage medium can be a ROM, a random-access memory (RAM), a compact disc read only memory (CD-ROM), a magnetic tape, a floppy disk and an optical data storage device, etc.

The non-transitory computer-readable storage medium is provided, the instructions in the non-transitory computer storage medium are executed by a processor of a communication device, causing the communication device to execute the above method for transmitting or receiving the CSI report.

An example embodiment of the present disclosure also provides a network device. The network device includes a processor; a transceiver connected to the processor. The processor is configured to load and execute executable instructions to implement the method for transmitting or receiving the CSI report provided by the above method embodiments.

An example embodiment of the present disclosure also provides a chip. The chip includes a programmable logic circuit and/or program instructions, and when the chip is in operation, the method for transmitting or receiving the CSI report provided by the above method embodiments.

An example embodiment of the present disclosure also provides a computer-readable storage medium. The computer-readable storage medium stores at least one instruction, at least one program, code set or instruction set, and the at least one instruction, the at least one program, the code set or the instruction set is loaded and executed by the processor to implement the method for transmitting or receiving the CSI report provided by the above method embodiments.

It should be understood that, "a plurality of" mentioned in this disclosure refers to two or more. "And/or", describes the relationship of the association objects, indicating that there may exist three relationships, for example, A and/or B, may represent: any of existing A only, existing both A and B, or existing B only. The character "/" generally means the contextual object is a kind of "or" relationship.

After considering the specification and practicing the disclosure here, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

## Claims

1. A method for transmitting a channel state information (CSI) report, comprising:
transmitting, by a terminal, a CSI report, wherein the CSI report comprises CSI corresponding to at least one transmission of at least two transmissions of at least one channel state information reference signal (CSI-RS) in one period.

2. The method according to claim 1, further comprising:
receiving, by the terminal, CSI-RS configuration information, wherein the CSI-RS configuration information configures at least one CSI-RS resource;
wherein the CSI report comprises CSI obtained by measuring based on the at least one CSI-RS resource.

3. The method according to claim 1, wherein the CSI-RS configuration information comprises at least one of:
a state of repetition corresponding to the at least one CSI-RS, wherein the state comprises an on state or an off state;
a number L of transmissions of the at least one CSI-RS in one period, where L is a positive integer;
an interval T between two transmissions of the at least one CSI-RS in one period;
a muting pattern of the at least one CSI-RS in one period;
a period of the at least one CSI-RS;
a slot offset of the at least one CSI-RS;
a symbol position occupied by the at least one CSI-RS;
a frequency domain resource position of the at least one CSI-RS;
a number of ports of the at least one CSI-RS;
a density of the at least one CSI-RS; or
quasi co-location (QCL) information of the at least one CSI-RS.

4. The method according to claim 1, wherein the CSI-RS report indicates at least one of following information:
an index of the at least one CSI-RS, and a sequence number corresponding to at least one transmission of L transmissions in one period for the index of the at least one CSI-RS; or
at least one of amplitude or phase of the at least one CSI-RS.

5. The method according to claim 4, wherein the amplitude comprises at least one of a broadband amplitude or a narrowband amplitude;
wherein the amplitude comprises an amplitude corresponding to the at least one transmission of the L transmissions of the at least one CSI-RS in one period.

6. The method according to claim 4, wherein the phase comprises at least one of a broadband phase or a narrowband phase;
wherein the phase comprises a phase corresponding to the at least one transmission of the L transmissions of the at least one CSI-RS in one period.

7. A method for receiving a channel state information (CSI) report, comprising:
receiving, by a network device, a CSI report, wherein the CSI report comprises CSI corresponding to at least one transmission of at least two transmissions of at least one channel state information reference signal (CSI-RS) in one period.

8. The method according to claim 7, further comprising:
transmitting, by the network device, CSI-RS configuration information, wherein the CSI-RS configuration information indicates at least one CSI-RS resource;
wherein the CSI report comprises CSI obtained by measuring based on the at least one CSI-RS resource.

9. The method according to claim 8, wherein the CSI-RS configuration information carries at least one of:
a state of repetition corresponding to the at least one CSI-RS, wherein the state comprises an on state or an off state;
a number L of transmissions of the at least one CSI-RS in one period, where L is an integer greater than 1;
an interval T between two transmissions of the at least one CSI-RS in one period;
a muting pattern of the at least one CSI-RS in one period;
a period of the at least one CSI-RS;
a slot offset of the at least one CSI-RS;
a symbol position occupied by the at least one CSI-RS;
a frequency domain resource position of the at least one CSI-RS;
a number of ports of the at least one CSI-RS;
a density of the at least one CSI-RS; or
quasi co-location (QCL) information of the at least one CSI-RS

10. The method according to claim 7, wherein the CSI-RS report indicates at least one of following information:
an index of the at least one CSI-RS, and a sequence number corresponding to at least one transmission of L transmissions in one period for the index of the at least one CSI-RS; or
at least one of amplitude or phase of the at least one CSI-RS.

11. The method according to claim 10, wherein the amplitude comprises at least one of a broadband amplitude or a narrowband amplitude;
wherein the amplitude comprises an amplitude corresponding to the at least one transmission of the L transmissions of the at least one CSI-RS in one period.

12. The method according to claim 10, wherein the phase comprises at least one of a broadband phase or a narrowband phase;
wherein the phase comprises a phase corresponding to the at least one transmission of the L transmissions of the at least one CSI-RS in one period.

13. An apparatus for transmitting a channel state information (CSI) report, comprising:
a transmitting module, configured to transmit a CSI report, wherein the CSI report comprises CSI corresponding to at least one transmission of at least two transmissions of at least one channel state information reference signal (CSI-RS) in one period.

14. The apparatus according to claim 13, further comprising:
a receiving module, configured to receive CSI-RS configuration information, wherein the CSI-RS configuration information indicates at least one CSI-RS resource;
wherein the CSI report comprises CSI obtained by measuring based on the at least one CSI-RS resource.

15. The apparatus according to claim 14, wherein the CSI-RS configuration information carries at least one of:
a state of repetition corresponding to the at least one CSI-RS, wherein the state comprises an on state or an off state;
a number L of transmissions of the at least one CSI-RS in one period, where L is an integer greater than 1;
an interval T between two transmissions of the at least one CSI-RS in one period;
a muting pattern of the at least one CSI-RS in one period;
a period of the at least one CSI-RS;
a slot offset of the at least one CSI-RS;
a symbol position occupied by the at least one CSI-RS;
a frequency domain resource position of the at least one CSI-RS;
a number of ports of the at least one CSI-RS;
a density of the at least one CSI-RS; or
quasi co-location (QCL) information of the at least one CSI-RS.

16. The apparatus according to claim 13, wherein the CSI-RS report indicates at least one of following information:
an index of the at least one CSI-RS, and a sequence number corresponding to at least one transmission of L transmissions in one period for the index of the at least one CSI-RS; or
at least one of amplitude or phase of the at least one CSI-RS.

17. The apparatus according to claim 16, wherein the amplitude comprises at least one of a broadband amplitude or a narrowband amplitude;
wherein the amplitude comprises an amplitude corresponding to the at least one transmission of the L transmissions of the at least one CSI-RS in one period.

18. The apparatus according to claim 16, wherein the phase comprises at least one of a broadband phase or a narrowband phase;
wherein the phase comprises a phase corresponding to the at least one transmission of the L transmissions of the at least one CSI-RS in one period.

19. An apparatus for receiving a channel state information (CSI) report, comprising:
a receiving module, configured to receive a CSI report, wherein the CSI report comprises CSI corresponding to at least one transmission of at least two transmissions of at least one channel state information reference signal (CSI-RS) in one period.

20. The apparatus according to claim 19, further comprising:
a transmitting module, configured to transmit CSI-RS configuration information, wherein the CSI-RS configuration information indicates at least one CSI-RS resource;
wherein the CSI report comprises CSI obtained by measuring based on the at least one CSI-RS resource.

21. The apparatus according to claim 20, wherein the CSI-RS configuration information carries at least one of
a state of repetition corresponding to the at least one CSI-RS, wherein the state comprises an on state or an off state;
a number L of transmissions of the at least one CSI-RS in one period, where L is an integer greater than 1;
an interval T between two transmissions of the at least one CSI-RS in one period;
a muting pattern of the at least one CSI-RS in one period;
a period of the at least one CSI-RS;
a slot offset of the at least one CSI-RS;
a symbol position occupied by the at least one CSI-RS;
a frequency domain resource position of the at least one CSI-RS;
a number of ports of the at least one CSI-RS;
a density of the at least one CSI-RS; or
quasi co-location (QCL) information of the at least one CSI-RS

22. The apparatus according to claim 19, wherein the CSI-RS report indicates at least one of following information:
an index of the at least one CSI-RS, and a sequence number corresponding to at least one transmission of L transmissions in one period for the index of the at least one CSI-RS; or
at least one of amplitude or phase of the at least one CSI-RS.

23. The apparatus according to claim 22, wherein the amplitude comprises at least one of a broadband amplitude or a narrowband amplitude;
wherein the amplitude comprises an amplitude corresponding to the at least one transmission of the L transmissions of the at least one CSI-RS in one period.

24. The apparatus according to claim 22, wherein the phase comprises at least one of a broadband phase or a narrowband phase;
wherein the phase comprises a phase corresponding to the at least one transmission of the L transmissions of the at least one CSI-RS in one period.

25. A communication device, comprises a processor and a memory, wherein the memory stores a computer program, and the computer program is loaded and executed by the processor to implement the method for transmitting the CSI report as described in any one of claims 1 to 6, or the method for receiving the CSI report as described in any one of claims 7 to 12.

26. A chip, comprises a programmable logic circuit and/or program instructions, and when the chip is in operation, the method for transmitting the CSI report as described in any one of claims 1 to 6 is implemented, or the method for receiving the CSI report as described in any one of claims 7 to 12 is implemented.

27. A computer-readable storage medium, having a computer program stored thereon, wherein the computer program is executed by a processor, to implement the method for transmitting the CSI report as described in any one of claims 1 to 6, or the method for receiving the CSI report as described in any one of claims 7 to 12.
